# EUROPEAN PATENT APPLICATION

(11) **EP 4 498 198 A1**
(43) Date of publication of application: **29.01.2025**
(21) Application number: 24188818.9
(22) Date of filing: 16.07.2024
(51) Int. Cl.: G05B 23/02

(54) **DETECTION APPARATUS, DETECTION METHOD, AND DETECTION PROGRAM**

(30) Priority: 28.07.2023 JP 2023123500
(71) Applicant: Yokogawa Electric Corporation, Tokyo 180-8750 (JP)
(72) Inventor: ISHINABE, Atsushi, Musashino-shi, Tokyo, 180-8750 (JP)
(74) Representative: Winter, Brandl - Partnerschaft mbB

(57) **Abstract**

A server device (10) collects measurement data measured by a field device (20), inputs the measurement data collected, into a trained detection model that predicts a predetermined event in response to input of measurement data, obtains an output result from the trained detection model, executes, in a case where the output result from the trained detection model is different from a determination result by a worker W who has checked the field device (20) for which the predetermined event was predicted, retraining of the trained detection model by using a label value input by the worker W and the measurement data collected, and thereby generates a retrained model.

## Description

### FIELD

The present invention relates to a detection apparatus, a detection method, and a detection program.

### BACKGROUND

In a known technique for detecting an anomalous state of a plant on the basis of a normal state model that has been trained by input data, unsupervised machine learning is performed on the basis of normal data that have been collected beforehand, and the normal state model is generated by extraction of features of the normal data (see, for example, Japanese Unexamined Patent Application Publication No. 11-338848).

However, in the above mentioned technique, precision of the machine learning model ("the learning model", as appropriate) to detect a predictor of the anomalous state (the " anomaly predictor" as appropriate) is difficult to be improved. For example, in the above mentioned technique, the data collected beforehand are not labelled, an evaluation index of the learning model is thus unable to be calculated, and whether or not the learning model to be used is appropriate is thus difficult to be determined.

The present invention has been made in view of the above, and an object thereof is to improve precision of a learning model to detect a predictor of occurrence of an anomaly.

### SUMMARY

According to an aspect of the embodiments, a detection apparatus includes a collection unit that collects measurement data measured by a measurement device, a detection unit that inputs the measurement data collected, into a trained learning model and obtains a detection result that is output from the trained learning model, the trained learning model being a learning model that predicts a predetermined event in response to input of measurement data, and an execution unit that executes, in a case where the detection result from the trained learning model is different from a determination result by a user who has checked the measurement device for which the predetermined event was predicted, retraining of the trained learning model by using a label value input by the user and the measurement data collected, and thereby generates a retrained model.

According to an aspect of the embodiments, a detection method that causes a computer to execute a process includes collecting measurement data measured by a measurement device, inputting the measurement data collected, into a trained learning model and obtaining a detection result that is output from the trained learning model, the trained learning model being a learning model that predicts a predetermined event in response to input of measurement data, and executing, in a case where the detection result that is the output from the trained learning model is different from a determination result by a user who has checked the measurement device for which the predetermined event was predicted, retraining of the trained learning model by using a label value input by the user and the measurement data collected, and thereby generating a retrained model.

According to an aspect of the embodiments, a detection program that causes a computer to execute a process includes collecting measurement data measured by a measurement device, inputting the measurement data collected, into a trained learning model and obtaining a detection result that is output from the trained learning model, the trained learning model being a learning model that predicts a predetermined event in response to input of measurement data, and executing, in a case where the detection result that is the output from the trained learning model is different from a determination result by a user who has checked the measurement device for which the predetermined event was predicted, retraining of the trained learning model by using a label value input by the user and the measurement data collected, and thereby generating a retrained model.

### BRIEF DESCRIPTION OF THE DRAWINGS

FIG. 1 is a diagram illustrating an example of a configuration of and an example of processing by an anomaly predictor detection system according to an embodiment;
FIG. 2 is a block diagram illustrating an example of a configuration of each apparatus in the anomaly predictor detection system according to the embodiment;
FIG. 3 is a diagram illustrating a detection result storage unit of a server device according to the embodiment;
FIG. 4 is a diagram illustrating a determination result storage unit of the server device according to the embodiment;
FIG. 5 is a diagram illustrating an evaluation index storage unit of the server device according to the embodiment;
FIG. 6 is a diagram illustrating a detection model storage unit of the server device according to the embodiment;
FIG. 7 is a diagram illustrating an example of a detection model according to the embodiment;
FIG. 8 is a diagram illustrating a first specific example of a display screen on a worker terminal according to the embodiment;
FIG. 9 is a diagram illustrating a second specific example of the display screen on the worker terminal according to the embodiment;
FIG. 10 is a diagram illustrating a third specific example of the display screen on the worker terminal according to the embodiment;
FIG. 11 is a flowchart illustrating an example of a flow of overall processing by the anomaly predictor detection system according to the embodiment;
FIG. 12 is a flowchart illustrating an example of a flow of a detection model building process by the anomaly predictor detection system according to the embodiment;
FIG. 13 is a flowchart illustrating an example of a flow of an anomaly predictor output process by the anomaly predictor detection system according to the embodiment; and
FIG. 14 is a diagram illustrating an example of a hardware configuration according to the embodiment.

### DETAILED DESCRIPTION OF THE PREFERRED EMBODIMENTS

A detection apparatus, a detection method, and a detection program, according to one embodiment of the present invention will hereinafter be described in detail by reference to the drawings. The present invention is not to be limited by the embodiment described hereinafter.

### Embodiment

A configuration of and processing by an anomaly predictor detection system 100 according to an embodiment, a configuration of and processing by each apparatus in the anomaly predictor detection system 100, and flows of processes in the anomaly predictor detection system 100 will hereinafter be described in order and effects of the embodiment will be described lastly.

### 1. Configuration of and Processing by Anomaly Predictor Detection System 100

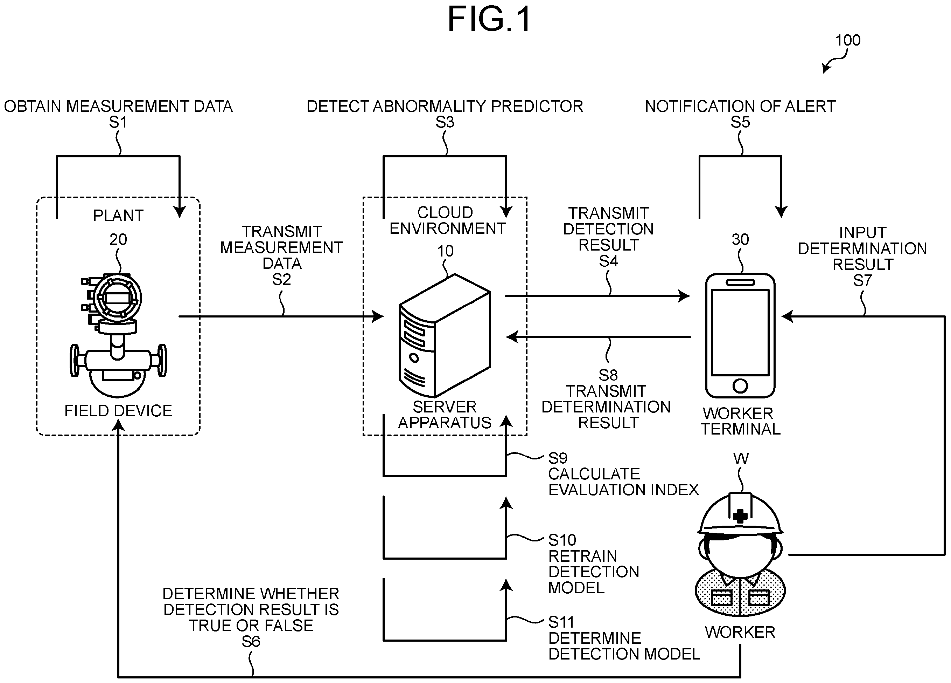

A configuration of and processing by the anomaly predictor detection system 100 according to the embodiment will be described in detail by use of FIG. 1. FIG. 1 is a diagram illustrating an example of the configuration of and an example of the processing by the anomaly predictor detection system 100 according to the embodiment. An example of an overall configuration of the anomaly predictor detection system 100, an example of overall processing by the anomaly predictor detection system 100, and problems in an anomaly predictor detection system 100P according to reference art will hereinafter be described in order and effects of the anomaly predictor detection system 100 will be described lastly. Remote monitoring of factory production using plant instruments, which are devices installed in a plant, will be described as an example with respect to the embodiment, but devices and fields of use are not limited and the embodiment may be applied to remote monitoring of environmental measurement, such as electric power monitoring, wind power generation, water and sewerage monitoring, and monitoring of rivers.

### 1-1. Example of Overall Configuration of Anomaly Predictor Detection System 100

An example of the overall configuration of the anomaly predictor detection system 100 will now be described by use of FIG. 1. The anomaly predictor detection system 100 has a server device 10, a field device 20, and a worker terminal 30. The server device 10, the field device 20, and the worker terminal 30 are communicably connected to one another by wire or wirelessly via a predetermined communication network not illustrated in the drawings. Any of various communication networks, such as the Internet and a dedicated line, may be adopted as the predetermined communication network.

### 1-1-1. Server device 10

The server device 10 is a detection apparatus installed in a cloud environment. The anomaly predictor detection system 100 illustrated in FIG. 1 may include a plurality of the server devices 10. Furthermore, the server device 10 may be implemented by an on-premise environment or an edge environment, for example.

### 1-1-2. Field device 20

The field device 20 is a plant instrument included in a plant. The example in FIG. 1 illustrates a case where the field device 20 is implemented by a Coriolis flowmeter.

### 1-1-3D. Worker Terminal 30

The worker terminal 30 is used by a worker W who performs, for example, maintenance and inspection of the plant and the field device 20. The worker terminal 30 is manipulated by the worker W. The worker terminal 30 is implemented by, for example, a smartphone, a tablet terminal, a desktop personal computer (PC), a notebook PC, a smartwatch, a mobile phone, or a personal digital assistant (PDA). The example in FIG. 1 illustrates a case where the worker terminal 30 is implemented by a smartphone.

### 1-2. Example of Overall Processing by Anomaly Predictor Detection System 100

An example of the overall processing by the anomaly predictor detection system 100 will be described by use of FIG. 1. Processing from Step S1 to Step S11 described below may be executed in a different sequence. Furthermore, any of the processing from Step S1 to Step S11 described below may be omitted.

### 1-2-1. Measurement Data Obtainment Process

The field device 20 obtains measurement data (Step S1). The measurement data obtained by the field device 20 are, for example, sensor data, such as phase difference data, frequency data, temperature data, drive electric current data, fluid pressure data, and/or density data.

### 1-2-2. Measurement Data Transmission Process

The field device 20 transmits measurement data to the server device 10 (Step S2). The measurement data obtained and transmitted to the server device 10 by the field device 20 are, for example, sensor data, such as phase difference data, frequency data, temperature data, drive electric current data, fluid pressure data, and/or density data.

### 1-2-3. Anomaly Predictor Detection Process

The server device 10 detects any anomaly predictor ("unusualness", as appropriate) for the plant from measurement data (Step S3). For example, the server device 10 detects any anomaly predictor for the plant by using a trained detection model DM that is an unsupervised learning model and that outputs an anomaly predictor for the plant in response to input of measurement data.

An anomaly predictor herein is a state having a possibility of occurrence of an anomalous state negatively affecting the plant, such as an equipment failure or an anomalous value. Furthermore, the server device 10 may detect, in addition to an anomaly predictor mentioned above, for example, a time period of a normal state, or an improvement predictor predictive of an ongoing improvement, that is, an intermediate range corresponding to a transition from the anomalous state to the normal state.

Furthermore, the server device 10 may detect any anomaly predictor by using a single detection model DM or may detect any anomaly predictor by using plural detection models DM.

### 1-2-4. Detection Result Transmission Process

The server device 10 transmits a detection result to the worker terminal 30 (Step S4). The detection result transmitted to the worker terminal 30 by the server device 10 is, for example, an anomaly predictor for the plant, a detection time, and identification information on the field device 20 relevant to the detection.

### 1-2-5. Alert Notification Process

The worker terminal 30 notifies the worker W of an alert (Step S5). For example, in a case where the worker terminal 30 has received a detection result from the server device 10, the worker terminal 30 displays an anomaly predictor for the plant, a detection time, and identification information on the field device 20 relevant to the detection, on a monitor screen thereof, and prompts the worker W to check presence or absence of the anomaly predictor for the plant.

### 1-2-6. Detection Result Determination Process

The worker W determines whether a detection result is true or false (Step S6). For example, the worker W visually checks presence or absence of an anomaly predictor for the field device 20, the anomaly predictor having been received as the detection result, and determines whether the detection result is true or false. In the case where the field device 20 is a Coriolis flowmeter, for example, the worker W determines that the anomaly predictor is "true" if a slug that is not observed in the normal state is included in fluid to be measured, and determines that the anomaly predictor is "false" if no difference from the normal state is recognized.

### 1-2-7. Determination Result Input Process

The worker W inputs a determination result to the worker terminal 30 (Step S7). For example, the worker W inputs whether a detection result is true or false by manipulating an input screen displayed on the monitor screen of the worker terminal 30.

### 1-2-8. Determination Result Transmission Process

The worker terminal 30 transmits a determination result to the server device 10 (Step S8). For example, the worker terminal 30 transmits the determination result input by the worker W to the server device 10, the determination result indicating whether the detection result is true or not.

### 1-2-9. Evaluation Index Calculation Process

The server device 10 calculates an evaluation index from a determination result (Step S9). For example, the server device 10 calculates an evaluation index in a predetermined time period for each detection model DM and transmits the evaluation index calculated, to the worker terminal 30. The evaluation index herein is a numerical value indicating precision of the machine learning model and is, for example, a accuracy score, precision score, a recall score, specificity, or an F value.

Furthermore, the server device 10 generates output data on any anomaly predictor in a predetermined time period for each detection model DM, generates a time series graph representing measurement data, for example, and transmits the generated time series graph to the worker terminal 30.

### 1-2-10. Model Retraining Process

The server device 10 implements retraining of a detection model DM (Step S10). For example, the server device 10 retrains any detection model DM that has output a detection result determined to be not true, among plural detection models DM, by using measurement data, and updates various parameters. In a case where an evaluation index of a detection model DM is less than a predetermined value, the server device 10 may retrain the detection model DM using measurement data and may update various parameters.

### 1-2-11. Model Determination Process

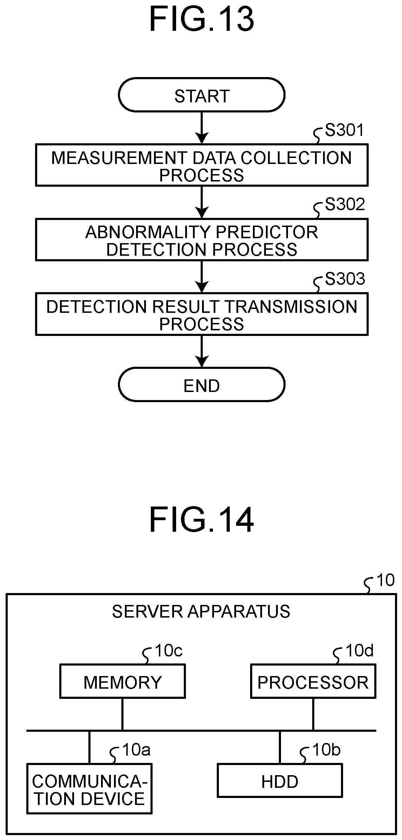

The server device 10 makes a determination on a detection model DM (Step S11). For example, in a case where evaluation indices of plural detection models DM are equal to or larger than a predetermined value, the server device 10 determines these detection models DM to be models to be used in any subsequent anomaly prediction process, for example, models ("adopted models", as appropriate) to detect any anomaly predictor in FIG. 13 described later. The server device 10 may determine one or more detection models DM with evaluation indices equal to or larger than a predetermined value, among the plural detection models DM, to be an adopted model or adopted models. Furthermore, in a case where plural detection models DM have been determined to be adopted models, the server device 10 may notify the worker W of all of detection results that are output from the plural detection models DM in an anomaly predictor detection process and a detection result transmission process in FIG. 13, or may notify the worker W of only a detection result that is output from a detection model DM with the largest evaluation index among the plural detection models DM.

Furthermore, the server device 10 may determine one or more detection models DM selected from plural detection models DM by the worker W on the basis of evaluation indices and time series graphs, to be an adopted model or adopted models.

### 1-3. Effects of Anomaly Predictor Detection System 100

Effects of the anomaly predictor detection system 100 will hereinafter be described after description of a scheme of and problems in the anomaly predictor detection system 100P according to the reference art.

### 1-3-1. Scheme of Anomaly Predictor Detection System 100P

The following processing is executed in the anomaly predictor detection system 100P according to the reference art. Firstly, the anomaly predictor detection system 100P implements unsupervised learning on the basis of normal data that have been collected beforehand, extracts features of the normal data, and stores the extracted features as a normal state model. Secondly, on the basis of unknown input data and the normal state model, the anomaly predictor detection system 100P dynamically detects a normality determination reference value enabling input data to be regarded as normal. Thirdly, on the basis of input data and the normal state model, the anomaly predictor detection system 100P calculates a determination value for an anomaly determination on the input data. Fourthly, on the basis of the normality determination reference value and the determination value, the anomaly predictor detection system 100P performs anomaly predictor detection for input data by detecting any anomalous state diverged from a normal state.

### 1-3-2. Problems in Anomaly Predictor Detection System 100P

The anomaly predictor detection system 100P according to the reference art has the following problems. Firstly, in the anomaly predictor detection system 100P, the data collected beforehand are not labelled and an evaluation index of the machine learning model is thus unable to be calculated. Secondly, in the anomaly predictor detection system 100P, in the early stage after the introduction of the machine learning model, the machine learning model is unable to be changed easily, and reviewing the machine learning model before introduction of the machine learning model to a plant thus requires a long period of time.

### 1-3-3. Scheme of Anomaly Predictor Detection System 100

The following processing is executed in the anomaly predictor detection system 100 according to the embodiment. Firstly, the server device 10 collects measurement data transmitted by the field device 20, inputs the measurement data into a detection model DM, and thereby detects any anomaly predictor for the plant. The server device 10 prepares plural unsupervised learning models obtained from training data sets beforehand, performs training with time series data for retraining of the models on the basis of the trained models that have been obtained, and notifies the worker W of any anomaly predictor output. Secondly, the server device 10 receives a determination result input by the worker W, the determination result corresponding to a detection result. In a case where the worker W has been notified of an anomaly predictor, the worker W inputs whether or not the anomaly predictor, that is, unusualness is correct (true anomaly: true positive; false anomaly: false positive) through an application on the worker terminal 30, such as a smartphone or a PC. A "true positive" is a situation where an anomaly predictor has been detected by the server device 10 (unusualness found) and the worker W has affirmed the anomaly predictor (unusualness: correct). A "false positive" is a situation where an anomaly predictor has been detected by the server device 10 (unusualness found) and the worker W has not been able to affirm the anomaly predictor (unusualness: incorrect).

### 1-3-4. Effects of Anomaly Predictor Detection System 100

The anomaly predictor detection system 100 has the following effects. Firstly, the anomaly predictor detection system 100 enables comparison for determination of which detection model DM of plural detection models DM is preferable by calculation of evaluation indices. Therefore, even if the normal range or the work process is changed, an appropriate detection model DM that has been trained is able to be selected. Secondly, in the anomaly predictor detection system 100, plural detection models DM are simultaneously used in detection of any anomaly predictor and comparison to an on-site determination result from the worker W enables the detection models DM to be updated. Therefore, detailed examinations of the detection models DM before introduction of the detection models DM to the plant are not needed.

As described above, the anomaly predictor detection system 100 enables an optimum detection model DM to be built by updating a detection model DM that has been obtained by unsupervised training. Therefore, precision of detection models DM to detect any anomaly predictor for a plant is able to be improved. Furthermore, an optimum model is able to be adopted from plural models in the anomaly predictor detection system 100.

Furthermore, the anomaly predictor detection system 100 has the following effects. The anomaly predictor detection system 100 enables easy and intuitive manipulation by the worker W. Therefore, introduction of the anomaly predictor detection system 100 to plants by users of the plants is facilitated. Furthermore, a lot of domain knowledge and many rules of thumb are needed for selection of a learning mode and vendors of learning models are required to have such knowledge and rules of thumb. However, models are selected on the basis of on-site data at the plant user end in the anomaly predictor detection system 100 and the plant user is able to keep the data and domain knowledge secret from the vendor. Furthermore, a change in a work process or introduction of an additional instrument requires learning models to be changed. However, the anomaly predictor detection system 100 enables a learning model to be built again by performing the same operation and the plant user does not need to rebuild a learning model by consulting with the vendor again. The anomaly predictor detection system 100 also enables bases for determination to be formed into a model, the bases indicating how experienced workers make determinations on anomaly. Therefore, any lack of successors is solved and application to education of inexperienced workers W is possible. In addition, in the anomaly predictor detection system 100, the vendor does not need to provide consultation for and to provide anomaly predictor detection solutions according to applications and plant users and versatility of the solutions is thus able to be increased.

### 2. Configuration of and Processing by Each Apparatus of Anomaly Predictor Detection System 100

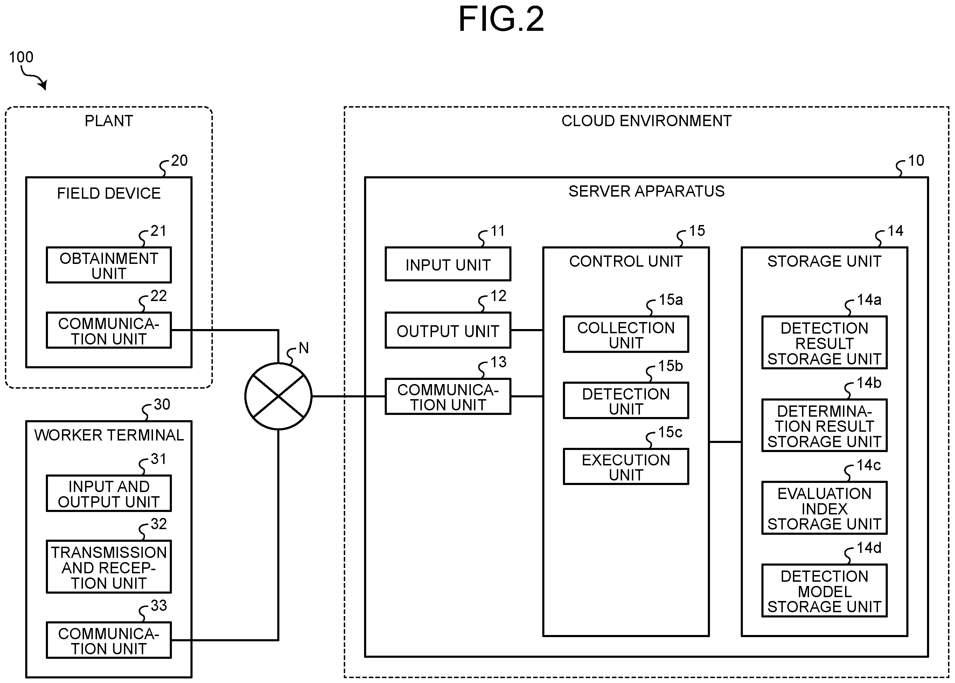

A configuration of and processing by each apparatus that the anomaly predictor detection system 100 illustrated in FIG. 1 has will now be described by use of FIG. 2. FIG. 2 is a block diagram illustrating an example of the configuration of each apparatus in the anomaly predictor detection system 100 according to the embodiment. An example of a configuration of and an example of processing by the server device 10 according to the embodiment, an example of a configuration of and an example of processing by the field device 20, and an example of a configuration of and an example of processing by the worker terminal 30 will hereinafter be described in detail after description of an example of an overall configuration of the anomaly predictor detection system 100 according to the embodiment.

### 2-1. Example of Overall Configuration of Anomaly Predictor Detection System 100

An example of the overall configuration of the anomaly predictor detection system 100 will now be described by use of FIG. 2. As illustrated in FIG. 2, the anomaly predictor detection system 100 has the server device 10, the field device 20, and the worker terminal 30. The server device 10 is communicably connected to the field device 20 and the worker terminal 30 via a communication network N implemented by the Internet or a dedicated line, for example. The server device 10 is installed in a cloud environment. The field device 20 is installed in the plant. The server device 10 may be installed in an on-premise environment or an edge environment, for example.

### 2-2. Example of Configuration of and Example of Processing by Server device 10

The example of the configuration of and the example of the processing by the server device 10 will now be described by use of FIG. 2. The server device 10 has an input unit 11, an output unit 12, a communication unit 13, a storage unit 14, and a control unit 15. The following description is on the example of the configuration of and the example of the processing by the server device 10, and the field device 20 may execute similar processing. That is, the anomaly predictor detection system 100 may be implemented by use of the field device 20 only.

### 2-2-1. Input Unit 11

The input unit 11 governs input of various kinds of information to the server device 10. For example, the input unit 11 is implemented by a mouse and a keyboard, and receives input of various kinds of information to the server device 10.

### 2-2-2. Output Unit 12

The output unit 12 governs output of various kinds of information from the server device 10. For example, the output unit 12 is implemented by a display and displays various kinds of information stored in the server device 10.

### 2-2-3. Communication Unit 13

The communication unit 13 governs data communication to and from another device. For example, the communication unit 13 performs data communication to and from each communication device via a router. The communication unit 13 may perform data communication to and from a terminal of an operator not illustrated in the drawings.

### 2-2-4. Storage Unit 14

The storage unit 14 stores various kinds of information referred to by the control unit 15 upon operation of the control unit 15 and various kinds of information obtained by the control unit 15 upon operation of the control unit 15. The storage unit 14 has a detection result storage unit 14a, a determination result storage unit 14b, an evaluation index storage unit 14c, and a detection model storage unit 14d. The storage unit 14 may be implemented by, for example: a semiconductor memory element, such as a random access memory (RAM) or a flash memory; or a storage device, such as a hard disk or an optical disk. In the example of FIG. 2, the storage unit 14 is installed in the server device 10, but the storage unit 14 may be installed outside the server device 10 or plural storage units may be installed.

### 2-2-4-1. Detection Result Storage Unit 14a

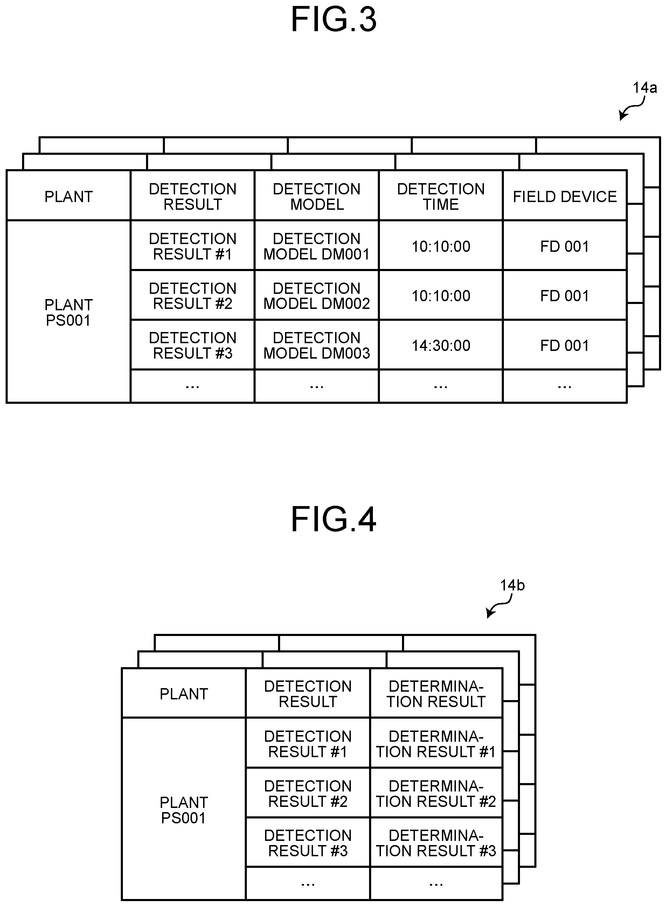

The detection result storage unit 14a stores detection results. For example, the detection result storage unit 14a stores a detection result detected by a detection unit 15b of the control unit 15 described later. An example of data stored by the detection result storage unit 14a will now be described by use of FIG. 3. FIG. 3 is a diagram illustrating an example of the detection result storage unit 14a of the server device 10 according to the embodiment. In the example of FIG. 3, the detection result storage unit 14a has items, such as "plant", "detection result", "detection model", "detection time", and "field device".

"Plant" indicates identification information for identifying a plant to be monitored and is, for example, an identification number or an identification symbol of the plant. "Detection result" indicates identification information for identifying a detection result and is, for example, an identification number or an identification symbol of an anomaly predictor detected by the detection unit 15b. "Detection model" indicates identification information for identifying a machine learning model and is, for example, an identification number or an identification symbol of a detection model DM that has output an anomaly predictor. "Detection time" indicates a time of detection of a detection result and is represented by, for example, year, month, day, hour, minute, and second. "Field device" indicates identification information for identifying the field device 20 that has obtained measurement data, and is, for example, an instrument name, or an identification number or an identification symbol, such as a model number, of the field device 20.

That is, FIG. 3 illustrates an example where the data stored in the detection result storage unit 14a for a plant identified by "plant PS001" include: "detection result #1" that is {detection model: "detection model DM001", detection time: "10:10:00", field device: "FD001"}; "detection result #2" that is {detection model: "detection model DM002", detection time: "10:10:00", field device: "FD001"}; "detection result #3" that is {detection model: "detection model DM003", detection time: "14:30:00", field device: "FD001"}; and so on.

### 2-2-4-2. Determination Result Storage Unit 14b

The determination result storage unit 14b stores determination results. For example, the determination result storage unit 14b stores a determination result that has been input by the worker W and transmitted from the worker terminal 30. An example of data stored by the determination result storage unit 14b will now be described by use of FIG. 4. FIG. 4 is a diagram illustrating an example of the determination result storage unit 14b of the server device 10 according to the embodiment. In the example of FIG. 4, the determination result storage unit 14b has items, such as "plant", "detection result", and "determination result".

"Plant" indicates identification information for identifying a plant to be monitored and is, for example, an identification number or an identification symbol of the plant. "Detection result" indicates identification information for identifying a detection result and is, for example, an identification number or an identification symbol of an anomaly predictor detected by the detection unit 15b. "Determination result" indicates a determination result corresponding to a detection result and is, for example, a determination on whether an anomaly predictor checked by the worker W is true or false.

That is, FIG. 4 illustrates an example where the data stored in the determination result storage unit 14b include, for the plant identified by "plant PS001 ": "determination result #1" that is a determination on whether an anomaly predictor corresponding to "detection result #1" is true or false; "determination result #2" that is a determination on whether or not an anomaly predictor corresponding to "detection result #2" is true or false; "determination result #3" that is a determination on whether an anomaly predictor corresponding to "detection result #3" is true or false; and so on.

### 2-2-4-3. Evaluation Index Storage Unit 14c

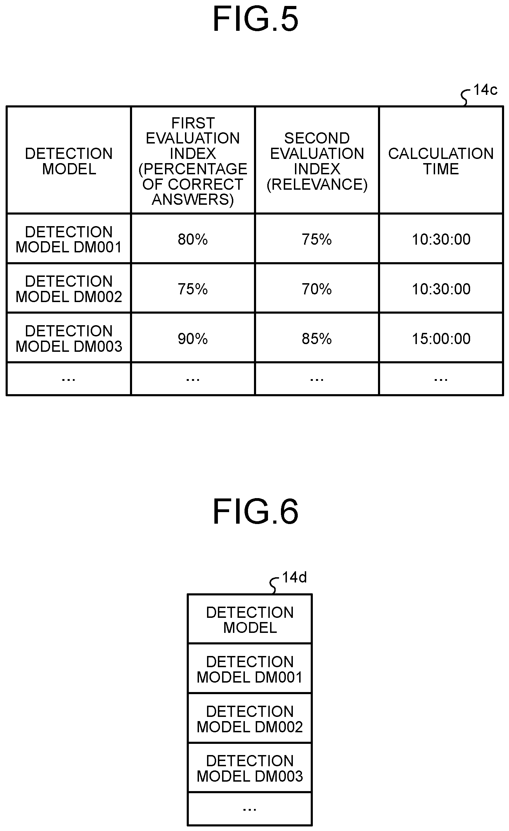

The evaluation index storage unit 14c stores evaluation indices. For example, the evaluation index storage unit 14c stores an evaluation index for each detection model DM and calculated by an execution unit 15c of the control unit 15 described later. An example of data stored by the evaluation index storage unit 14c will now be described by use of FIG. 5. FIG. 5 is a diagram illustrating an example of the evaluation index storage unit 14c of the server device 10 according to the embodiment. In the example of FIG. 5, the evaluation index storage unit 14c has items, such as "detection model", "evaluation index", and "calculation time".

"Detection model" indicates identification information for identifying a machine learning model and is, for example, an identification number or an identification symbol of a detection model DM that has output an anomaly predictor. "Evaluation index" indicates an evaluation index that is a numerical value representing precision of a learning model and is, for example, a accuracy score, precision score, a recall score, specificity, or an F value, of a detection model DM. "Calculation time" indicates a time of calculation of an evaluation index and is represented by year, month, day, hour, minute, and second.

That is, FIG. 5 illustrates an example where the data stored in the evaluation index storage unit 14c include: for a detection model DM identified by "detection model DM001", {first evaluation index (accuracy score): "80%", second evaluation index (precision score): "75%", calculation time: "10:30:00", ...}; for a detection model DM identified by "detection model DM002", {first evaluation index (accuracy score): "75%", second revaluation index (precision score): "70%", calculation time: "10:30:00", ...}; for a detection model DM identified by "detection model DM003 ", {first evaluation index (accuracy score): "90%", second evaluation index (precision score): "85%", calculation time: "15:00:00", ...}; and so on.

### 2-2-4-4. Detection Model Storage Unit 14d

The detection model storage unit 14d stores detection models DM. For example, the detection model storage unit 14d stores detection models DM used by the detection unit 15b of the control unit 15 described later. An example of data stored by the detection model storage unit 14d will now be described by use of FIG. 6. FIG. 6 is a diagram illustrating an example of the detection model storage unit 14d of the server device 10 according to the embodiment. In the example of FIG. 6, the detection model storage unit 14d has an item, such as "detection model".

"Detection model" is model data on a machine learning model and is, for example, data including model parameters that are execution data for execution of an algorithm of a detection model DM and hyperparameters.

That is, FIG. 6 illustrates an example where the data stored in the detection model storage unit 14d include model data on the detection models DM used by the detection unit 15b, the model data including: "detection model DM001"; "detection model DM002"; "detection model DM003 "; and so on.

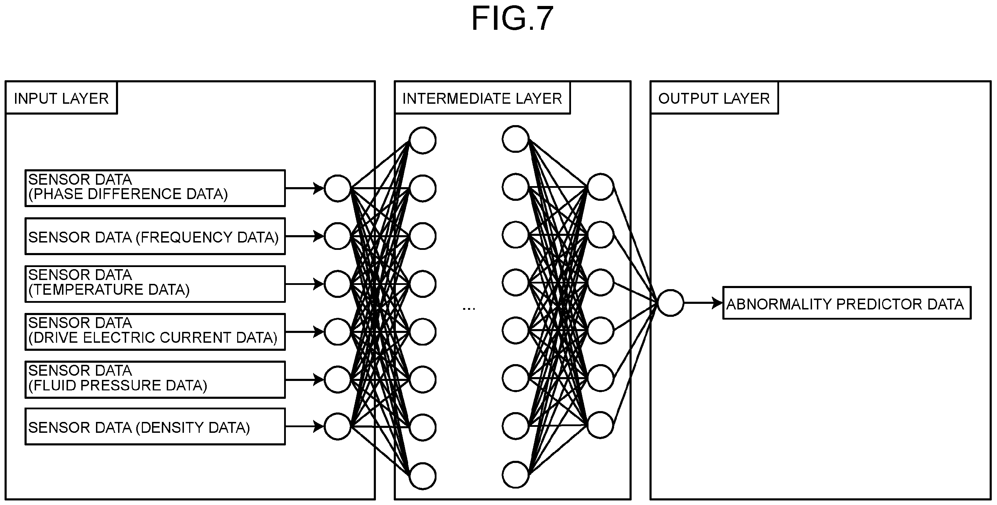

In a specific example described herein, a detection model DM in binary classification has input data that are measurement data collected from a Coriolis flowmeter and output data that are anomaly predictor data. FIG. 7 illustrates an example of a detection model DM using a neural network, but Isolation Forest or One-Class Support Vector Machine (SVM) may be used instead, for example, without being limited to the example.

In the example of FIG. 7, the detection model DM receives, at an input layer, input of sensor data, such as phase difference data, frequency data, temperature data, drive electric current data, fluid pressure data, and/or density data, executes, at an intermediate layer, analysis of the sensor data input and received, and outputs, at an output layer, anomaly predictor data, such as "an anomaly predictor found" and "no anomaly predictor found".

The detection model DM is built by use of a learning model that learns normal time data by unsupervised learning of: a neural network based method, such as Hotelling's T-squared theory, the local outlier factor method, or the autoencoder method; a classification based method, such as the self-organizing map method, One-Class Support Vector Machine (SVM), or Isolation Forest; change point detection; the k-nearest neighbor algorithm; the k-means clustering; or density based clustering, and that outputs a result of classification of any different behavior as an anomaly predictor, that is, unusualness. Furthermore, the detection model DM uses, at the input layer, one or more of pieces of sensor data obtained in the field device 20.

### 2-2-5. Control Unit 15

The control unit 15 illustrated in FIG. 2 governs overall control of the server device 10. The control unit 15 has a collection unit 15a, the detection unit 15b, and the execution unit 15c. The control unit 15 may be implemented by, for example, an electronic circuit, such as a central processing unit (CPU) or a micro processing unit (MPU), or an integrated circuit, such as an application specific integrated circuit (ASIC) or a field programmable gate array (FPGA).

### 2-2-5-1. Collection Unit 15a

The collection unit 15a collects various kinds of information. The collection unit 15a may store the various kinds of information collected, into the storage unit 14. For example, the collection unit 15a collects measurement data measured by a measurement device.

In a specific example described herein, the collection unit 15a collects measurement data transmitted by the field device 20, which is a Coriolis flowmeter, in chronological order, the measurement data including: "measurement data 001" {phase difference data: "phase difference data 001 ", frequency data: "frequency data 001", temperature data: "temperature data 00 1", drive electric current data: "drive electric current data 001", fluid pressure data: "fluid pressure data 001", density data: "density data 001"}; "measurement data 002" {phase difference data: "phase difference data 002", frequency data: "frequency data 002", temperature data: "temperature data 002", drive electric current data: "drive electric current data 002", fluid pressure data: "fluid pressure data 002", density data: "density data 002"}; and so on.

### 2-2-5-2. Detection Unit 15b

The detection unit 15b executes processing related to detection results. The detection unit 15b stores various kinds of information into the storage unit 14. Furthermore, the detection unit 15b obtains various kinds of information stored in the storage unit 14. In addition, the detection unit 15b obtains various kinds of information collected by the collection unit 15a. The following description is on an event prediction detection process and a detection result transmission process.

### Event Prediction Detection Process

The detection unit 15b obtains an output result from a detection model DM and detects a prediction for an event. The detection unit 15b stores a detection result into the detection result storage unit 14a. For example, the detection unit 15b inputs measurement data that have been collected, into a detection model DM that is a learning model that has been trained and that makes a prediction about a predetermined event in response to input of measurement data, and the detection unit 15b obtains a detection result that is output from the trained detection model DM and detects the detection result as a prediction about an event. Furthermore, the detection unit 15b obtains detection results that are respectively output from plural trained detection models DM that make predictions about a predetermined event and detects the detection results as predictions about an event.

The trained detection model DM is a learning model that has been trained by unsupervised training using training data including each piece of measurement data on a normal value from plural pieces of measurement data collected in a predetermined time period.

Furthermore, a prediction about an event is an "anomaly prediction" that is a predictor of an anomalous state of a target to be monitored, a "normality prediction" that is a predictor of a normal state of a target to be monitored, or an "improvement prediction" that is a predictor of an ongoing improvement of a target to be monitored, that is, an intermediate range corresponding to a transition from the anomalous state to the normal state.

On the basis of measurement data obtained by the field device 20 in the plant, the detection unit 15b detects, as an "anomaly prediction", a predictor of an anomalous state, for example, "an anomaly predictor found", the predictor corresponding to a predictor of a failure or occurrence of an anomalous value in the field device 20. The detection unit 15b may detect that no predictor of an anomalous state has been found, for example, "no anomaly predictor found", that is, a predictor of a normal state described later.

Furthermore, on the basis of measurement data obtained by the field device 20 in the plant, the detection unit 15b may detect, as a "normality prediction", a predictor of a normal state, such as "a normality predictor" for a progression to future normal operation of the field device 20.

Furthermore, on the basis of measurement data obtained by the field device 20 in the plant, the detection unit 15b may detect, as an "improvement prediction", a predictor of an improvement state, for example, "an improvement predictor found", for a progression to, for example, future improvement of an anomalous value from the current anomaly or the current anomaly predicted state of the field device 20. The detection unit 15b may detect that no predictor of an improvement state has been found, for example, "no improvement predictor found".

In a specific example described herein, the detection unit 15b inputs, into each of "detection model DM001", "detection model DM002", and "detection model DM003 ", input data that are measurement data collected from the field device 20, which is a Coriolis flowmeter, the measurement data including: "measurement data 001" {phase difference data: "phase difference data 001", frequency data: "frequency data 00 1", temperature data: "temperature data 001", drive electric current data: "drive electric current data 001", fluid pressure data: "fluid pressure data 001", density data: "density data 001"} and obtains output data {detection model DM001: "an anomaly predictor found", detection model DM002: "an anomaly predictor found", detection model DM003: "no anomaly predictor found"}. Furthermore, the detection unit 15b inputs, into each of "detection model DM001", "detection model DM002", and "detection model DM003", input data that are measurement data collected from the field device 20, which is a Coriolis flowmeter, the measurement data including: "measurement data 002" {phase difference data: "phase difference data 002", frequency data: "frequency data 002", temperature data: "temperature data 002", drive electric current data: "drive electric current data 002", fluid pressure data: "fluid pressure data 002", density data: "density data 002"} and obtains output data {detection model DM001: "no anomaly predictor found", detection model DM002: "no anomaly predictor found", detection model DM003: "an anomaly predictor found"}.

### Detection Result Transmission Process

In a case where the detection unit 15b has obtained an output result from a detection model DM, the detection unit 15b transmits a detection result that is the output result obtained, to a terminal used by a user to notify the user of the detection result.

In a case where an output result from a detection model DM that has been trained corresponds to a predictor of an anomalous state, the detection unit 15b performs notification to a user. For example, in a case where the detection unit 15b has detected an anomaly prediction on the basis of measurement data obtained by the field device 20 in the plant, the detection unit 15b transmits a detection result related to the anomaly prediction, to the worker terminal 30, and notifies the worker W at the plant of the detection result, "an anomaly predictor found", by causing the detection result to be displayed.

Furthermore, in a case where an output result from a detection model DM that has been trained corresponds to a predictor of a normal state, the detection unit 15b performs notification to a user. For example, in a case where the detection unit 15b has detected a normality prediction on the basis of measurement data obtained by the field device 20 in the plant, the detection unit 15b transmits a detection result related to the normality prediction, to the worker terminal 30, and notifies the worker W at the plant of the detection result, "a normality predictor", by causing the detection result to be displayed.

Furthermore, in a case where an output result from a detection model DM that has been trained corresponds to a predictor of an improvement state, the detection unit 15b performs notification to a user. For example, in a case where the detection unit 15b has detected an improvement prediction on the basis of measurement data obtained by the field device 20 in the plant, the detection unit 15b transmits a detection result related to the improvement prediction, to the worker terminal 30, and notifies the worker W at the plant of the detection result, "an improvement predictor found", by causing the detection result to be displayed.

In a specific example described herein, the detection unit 15b transmits, to the worker terminal 30 used by the worker W at the plant, a detection result from "detection model DM001" {detection result: "detection result #1", detection time: "10:10:00", field device: "FD001"}, a detection result from "detection model DM002" {detection result: "detection result #2", detection time: "10:10:00", field device: "FD001"}, and a detection result from "detection model DM003" {detection result: "detection result #3", detection time: "14:30:00", field device: "FD001"}, and causes the detection results to be displayed on an input and output unit 31 that is the monitor screen of the worker terminal 30.

### 2-2-5-3. Execution Unit 15c

The execution unit 15c executes processing related to adoption or retraining of a detection model DM. The execution unit 15c obtains various kinds of information stored in the storage unit 14. Furthermore, the execution unit 15c obtains various kinds of information collected by the collection unit 15a. In addition, the execution unit 15c obtains various kinds of information output by the detection unit 15b. The following description is on a retraining execution process, a score calculation process, a time series graph generation process, and detection model determination.

### Retraining Execution Process

In a case where a detection result from a detection model DM, which is a trained learning model, is different from a determination result by the worker W who is a user that has checked a device for which a predetermined event was predicted, the execution unit 15c generates a retrained model by executing retraining of the trained detection model DM by using a label value input by the worker W and measurement data that have been collected. Furthermore, the execution unit 15c executes retraining of a trained detection model DM by supervised training with teacher data having collected measurement data assigned with a label value based on a determination result. Furthermore, in a case where a detection result that is output from a trained learning model corresponds to a predictor of an anomalous state and the worker W has not affirmed the anomalous state or an anomaly predictor for a measurement device, the execution unit 15c executes retraining of the trained detection model DM by using teacher data having collected measurement data assigned with a label value indicating presence or absence of the anomalous state or an anomaly predicted state based on a determination result.

In a specific example described herein, in a case where the execution unit 15c has input, as input data, "measurement data 001" collected from the field device 20, which is a Coriolis flowmeter, into "detection model 002" and has obtained output data {detection model DM002: "an anomaly predictor found"}, and the output data are a false positive different from a determination result input by the worker W; the execution unit 15c executes retraining of "detection model 002" with training data that are teacher data having "measurement data 001" used in the above described processing and assigned with a label value, "no anomaly predictor found".

Furthermore, the execution unit 15c executes retraining of a trained detection model DM on the basis of an evaluation index. For example, the execution unit 15c executes retraining of a trained detection model DM having an evaluation index less than a predetermined value.

In a specific example described herein, the execution unit 15c calculates precision score as an evaluation index of "detection model DM002" by an evaluation index calculation process described later, and in a case where the precision score is less than "75%", the execution unit 15c executes retraining of "detection model DM002" with training data that are "measurement data 001" used in the above described processing, and updates model parameters and hyperparameters.

### Evaluation Index Calculation Process

The execution unit 15c calculates an evaluation index of a trained detection model DM on the basis of an output result from the trained detection model DM and a determination result by the worker W who has checked a measurement device, for which a predetermined event was predicted. Furthermore, on the basis of a detection result from each of plural trained detection models DM and a determination result by the worker W who has checked a device, for which a predetermined event was predicted, the execution unit 15c calculates, as an evaluation index or evaluation indices, at least one of a accuracy score, precision score, a recall score, specificity, and an F value. Furthermore, the execution unit 15c causes the worker terminal 30 used by the worker W to display the evaluation index or indices calculated.

The execution unit 15c calculates, as an evaluation index, for example, a accuracy score, precision score, a recall score, specificity, or an F value in a predetermined time period. For example, the execution unit 15c calculates precision score as an evaluation index for a detection model DM that outputs only "an anomaly predictor found" (positives), calculates a accuracy score, a recall score, and an F value as evaluation indices for a detection model DM that outputs "an anomaly predictor found" (positives) and "no anomaly predictor found" (negatives), and calculates specificity as an evaluation index for a detection model DM that outputs only "no anomaly predictor found" (negatives).

A accuracy score, precision score, a recall score, specificity, and an F value will hereinafter be described in this order in relation to evaluation indices calculated by the execution unit 15c. In the following description of the evaluation indices, detection of presence of a prediction of a predetermined event, such as an anomaly predictor, by the detection unit 15b will be referred to as a "positive", detection of absence of a prediction of a predetermined event by the detection unit 15b will be referred to as a "negative", determination of presence of a prediction of a predetermined event to be correct through a check by the worker W will be referred to as a "true positive", determination of presence of a prediction of a predetermined event to be incorrect through a check by the worker W will be referred to as a "false positive", determination of absence of a prediction of a predetermined event to be correct through a check by the worker W will be referred to as a "true negative", and determination of absence of a prediction of a predetermined event to be incorrect through a check by the worker W will be referred to as a "false negative".

### Accuracy score

In a case where 85 of 200 output results, "an anomaly predictor found" and "no anomaly predictor found", from "detection model DM003" are true positives, 15 of the 200 output results are false positives, 75 of the 200 output results are true negatives, and 25 of the 200 output results are false negatives, a accuracy score = (number of true positives + number of true negatives)/(number of true positives + number of false positives + number of true negatives + number of false negatives) = (85 + 75)/200 = 0.90 and the execution unit 15c thus calculates "90%" as an evaluation index of "detection model DM003".

### Precision score

In a case where 85 of 100 output results, "an anomaly predictor found", from "detection model DM003" are true positives and 15 of the 100 output results are false positives, precision score = (number of true positives)/(number of true positives + number of false positives) = 85/100 = 0.85 and the execution unit 15c thus calculates "85%" as an evaluation index of "detection model DM003".

### Recall score

In a case where 70 of 200 output results, "an anomaly predictor found" and "no anomaly predictor found", from "detection model DM002" are true positives, 30 of the 200 output results are false positives, 80 of the 200 output results are true negatives, and 20 of the 200 output results are false negatives, a recall score = (number of true positives)/(number of true positives + number of false negatives) = 70/70 + 20 = 0.777 and the execution unit 15c thus calculates "78%" as an evaluation index of "detection model DM002".

### Specificity

In a case where 85 of 100 output results, "no anomaly predictor found", from "detection model DM001" are true negatives and 15 of the 100 output results are false negatives, specificity =(number of true negatives)/(number of true negatives + number of false negatives) = 85/100 = 0.85 and the execution unit 15c thus calculates "85%" as an evaluation index of "detection model DM001".

### F value

In a case where 70 of 200 output results, "an anomaly predictor found" and "no anomaly predictor found", from "detection model DM002" are true positives, 30 of the 200 output results are false positives, 80 of the 200 output results are true negatives, and 20 of the 200 output results are false negatives, an F value (β = 1) = (number of true positives)/{number of true positives + (number of false positives + number of false negatives)/2} = 70/{70 + (30 + 20)/2} = 0.736 and the execution unit 15c thus calculates "74%" as an evaluation index of "detection model DM002".

### Time Series Graph Generation Process

The execution unit 15c generates a time series graph representing a history of output results of each of plural trained detection models DM and measurement data collected. Furthermore, the execution unit 15c causes the worker terminal 30 used by the worker W to display evaluation indices and time series graphs.

In a specific example described herein, the execution unit 15c displays a time series graph for "detection model DM001", the time series graph being a time series graph representing, as a line graph, "measurement data 001", "measurement data 002", "measurement data 003", ... collected from the field device 20, which is a Coriolis flowmeter, and displaying a detection time of output of "an anomaly predictor found" by "detection model DM001", the detection time having been colored, and transmits data on the generated time series graph to the worker terminal 30 to cause the time series graph to be displayed on the input and output unit 31 that is the monitor screen of the worker terminal 30.

Furthermore, the execution unit 15c generates a screen (a normal state screen) representing a normal state that is a detection result. Furthermore, the execution unit 15c causes the generated screen to be displayed at the worker terminal 30 used by the worker W in a form of enabling a switchover from display or non-display through manipulation by the worker W.

In a specific example described herein, the execution unit 15c generates, as a normal state screen for "detection model DM001", a time series graph representing the current normal operation or future normal operation of the field device 20, which is a Coriolis flowmeter, and transmits data on the generated time series graph to the worker terminal 30 to cause the time series graph to be displayed on the input and output unit 31 that is the monitor screen of the worker terminal 30. The execution unit 15c may generate data on a time series graph including buttons for, for example, "normal state notification ON" and "normal state notification OFF", and may cause the worker terminal 30 to perform display enabling a switchover from display or non-display of the normal state screen through manipulation by the worker W.

### Model Determination Process

The execution unit 15c determines adoption of a trained detection model DM having an evaluation index equal to or larger than a predetermined value, from plural trained detection models DM. Furthermore, the execution unit 15c determines adoption of a trained detection model DM selected by the worker W, from plural trained detection models DM.

In a specific example described herein, the execution unit 15c determines "detection model DM001" and "detection model DM003" to be adopted models that are used in processing by the detection unit 15b after this determination, in a case where the evaluation index of "detection model DM001" is "80%", the evaluation index of "detection model DM002" is "75%", the evaluation index of "detection model DM003" is "85%", and a reference value for adopting an evaluation index has been set to "80%".

Furthermore, in a case where the execution unit 15c has caused the worker terminal 30 to display the evaluation indices of "detection model DM001", "detection model DM002", and "detection model DM003 ", and time series graphs for "detection model DM001", "detection model DM002", and "detection model DM003", and the worker W has selected "detection model DM001" on the display screen; the execution unit 15c determines "detection model DM003" to be an adopted model that is used in processing by the detection unit 15b after this determination.

### 2-3. Example of Configuration of and Example of Processing by Field device 20

An example of a configuration of and an example of processing by the field device 20 will now be described by use of FIG. 2. The field device 20 is a sensor instrument, such as a thermometer, a manometer, or a flowmeter, and has an obtainment unit 21 and a communication unit 22.

### 2-3-1. Obtainment Unit 21

The obtainment unit 21 obtains measurement data. For example, the measurement data obtained by the obtainment unit 21 are sensor data, such as phase difference data, frequency data, temperature data, drive electric current data, fluid pressure data, and/or density data. The measurement data include sensor data obtained from each sensor or calculated data secondarily calculated from the sensor data. For example, in a case where the field device 20 is a Coriolis flowmeter, the obtainment unit 21 outputs, for example, mass flow rate data and density data by arithmetic processing, and in this arithmetic processing, for example, temperature data, phase difference data, frequency data, drive electric current data, and/or fluid pressure data are measured or calculated.

### 2-3-2. Communication Unit 22

The communication unit 22 governs data communication to and from another device. For example, the communication unit 22 performs data communication to and from each communication device via a router. Furthermore, the communication unit 22 may perform data communication to and from a terminal of an operator not illustrated in the drawings.

### 2-4. Example of Configuration of and Processing by Worker Terminal 30

An example of a configuration of and an example of processing by the worker terminal 30 will now be described by use of FIG. 2. The worker terminal 30 is a terminal used by the worker W who performs, for example, maintenance and inspection of the plant and the field device 20. The worker terminal 30 has the input and output unit 31, a transmission and reception unit 32, and a communication unit 33.

### 2-4-1. Input and Output Unit 31

The input and output unit 31 governs input of various kinds of information to the worker terminal 30. For example, the input and output unit 31 is implemented by a mouse, a keyboard, and/or a touch panel, and receives input of setting information to the worker terminal 30. Furthermore, the input and output unit 31 displays various kinds of information from the worker terminal 30. For example, the input and output unit 31 is implemented by a display and displays setting information stored in the worker terminal 30.

The input and output unit 31 displays a check result input screen where the worker W inputs a determination result. Details of the check result input screen will be described later in the section, "2-4-4. First Specific Example of Display Screen on Worker Terminal 30". Furthermore, the input and output unit 31 displays a detection model determination screen enabling the worker W to select a detection model DM. Details of the detection model determination screen will be described later in the sections, "2-4-5. Second Specific Example of Display Screen on Worker Terminal 30" and "2-4-6. Third Specific Example of Display Screen on Worker Terminal 30".

### 2-4-2. Transmission and Reception Unit 32

The transmission and reception unit 32 transmits various kinds of information. For example, the transmission and reception unit 32 transmits a determination result input by the worker W through the check result input screen, to the server device 10. Furthermore, the transmission and reception unit 32 transmits identification information on a detection model DM selected by the worker W through the detection model determination screen, to the server device 10.

The transmission and reception unit 32 receives various kinds of information. For example, the transmission and reception unit 32 receives a detection result, an evaluation index, and a time series graph, which the worker W is to be notified of, from the server device 10.

### 2-4-3. Communication Unit 33

The communication unit 33 governs data communication to and from another device. For example, the communication unit 33 performs data communication to and from each communication device via a router. Furthermore, the communication unit 33 may perform data communication to and from a terminal of an operator not illustrated in the drawings.

### 2-4-4. First Specific Example of Display Screen on Worker Terminal 30

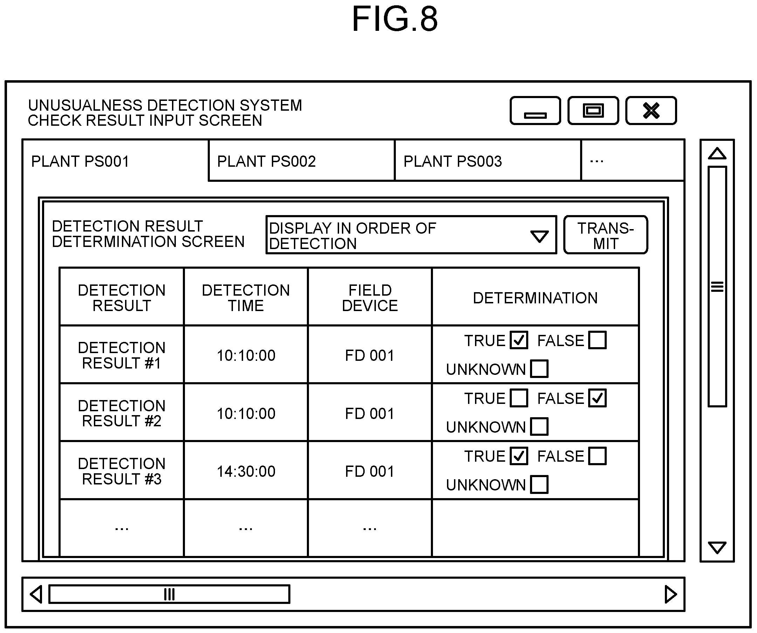

A first specific example of a display screen output by the input and output unit 31 of the worker terminal 30 will now be described by use of FIG. 8. FIG. 8 is a diagram illustrating the first specific example of the display screen on the worker terminal 30 according to the embodiment. The following description is on "detection result determination screen" displayed on "unusualness detection system check result input screen".

### 2-4-4-1. Detection Result Determination Screen

As illustrated in the example of FIG. 8, the worker terminal 30 displays "detection result", "detection time", "field device", and "determination", for each plant. In the example of FIG. 8, for a detection result, "detection result #1", a detection time of unusualness that is an anomaly predictor is "10:10:00", a field device 20 that has transmitted measurement data is "FD001", and check boxes for inputting whether "detection result #1" is true or false are displayed, at the worker terminal 30. In a case where a result of making a check on site at the plant for "detection result #1" is the same as the detection result or "true", the worker W input a determination result by clicking on a check box for "true" for "determination. Similarly, in a case where a result of making a check on site at the plant for "detection result #2" is different from the detection result or "false", the worker W inputs a determination result by clicking on a check box for "false" for "determination, and in a case where a result of making a check on site at the plant for "detection result #3" is "true", the worker W inputs a determination result by clicking on a checkbox for "true" for "determination". When the worker W has input all of determination results, the worker W may transmit the determination results to the server device 10 by clicking on a "transmit" button.

In a case where the worker W is unable to make a determination on whether a detection result is true or false as a result of making a check on site at the plant, the worker W may input a determination result by clicking on a checkbox for "unknown" for "determination. The detection result, for which "unknown" has been checked is removed from teacher data assigned with label values and also removed from a target of calculation for an evaluation index.

### 2-4-4-2. Display Format

As illustrated by the example in FIG. 8, the worker terminal 30 may display detection results in order of detection time of anomaly predictor. In the example of FIG. 8, because "display in order of detection" has been selected from a pulldown menu, the detection results are displayed in order of detection time of anomaly predictor, at the worker terminal 30. The worker terminal 30 may display detection results for each detection model DM or each field device 20.

### 2-4-5. Second Specific Example of Display Screen on Worker Terminal 30

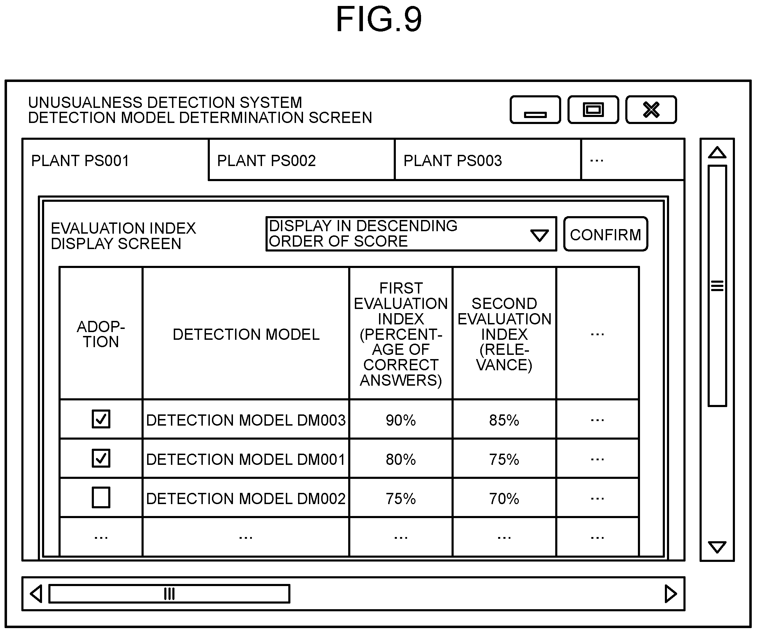

A second specific example of the display screen output by the input and output unit 31 of the worker terminal 30 will now be described by use of FIG. 9. FIG. 9 is a diagram illustrating the second specific example of the display screen on the worker terminal 30 according to the embodiment. The following description is on "evaluation index display screen" displayed on "unusualness detection system detection model determination screen".

### 2-4-5-1. Evaluation Index Display Screen

As illustrated by the example in FIG. 9, the worker terminal 30 displays "adoption", "detection model", "first evaluation index (accuracy score)", "second evaluation index (precision score)", ..., for each plant. In the example of FIG. 8, a list of evaluation indices is displayed at the worker terminal 30, the evaluation indices including: for "detection model DM003", "first evaluation index (accuracy score)" of "90%" and "second evaluation index (precision score)" of "85%"; for "detection model DM001", "first evaluation index (accuracy score)" of "80%" and "second evaluation index (precision score)" of "75%"; and for "detection model DM002", "first evaluation index (accuracy score)" of "75%" and "second evaluation index (precision score)" of "70%". In a case where the worker W selects adopted models that are "detection model DM003" and "detection model DM001" each having "second evaluation index (precision score)" of "75%" or more, the worker W clicks on a checkbox for "adoption" of "detection model DM003" and a checkbox for "adoption" of "detection model DM001". In confirming the adopted models, the worker W is able to transmit a result of selection of the adopted models to the server device 10 by clicking on a "confirm" button.

### 2-4-5-2. Display Format

As illustrated by the example in FIG. 9, the worker terminal 30 is capable of displaying detection models in descending order of evaluation index. In the example of FIG. 9, at the worker terminal 30, evaluation indices of the detection models DM are displayed in descending order of numerical value of "first evaluation index (accuracy score)" or "second evaluation index (precision score)" because "display in descending order of score" has been selected from a pulldown menu. The worker terminal 30 may display detection results for each kind of algorithm of detection models DM, for example.

### 2-4-6. Third Specific Example of Display Screen on Worker Terminal 30

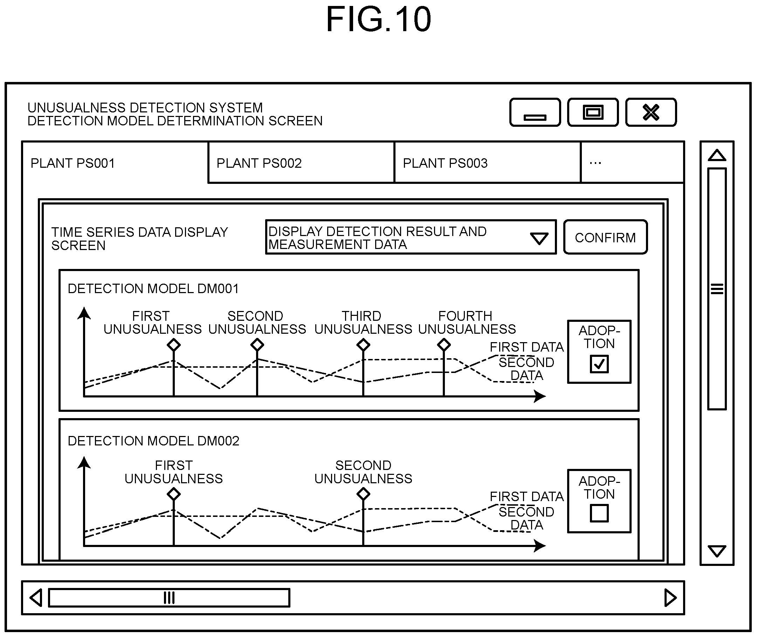

A third specific example of the display screen output by the input and output unit 31 of the worker terminal 30 will now be described by use of FIG. 10. FIG. 10 is a diagram illustrating the third specific example of the display screen on the worker terminal 30 according to the embodiment. The following description is on "time series data display screen" displayed on "unusualness detection system detection model determination screen".

### 2-4-6-1. Detection Result Determination Screen

As illustrated by the example in FIG. 10, the worker terminal 30 displays time series graphs for "detection model DM001", "detection model DM002", ..., for each plant. In the example of FIG. 10, at the worker terminal 30, for "detection model DM001 ", with graphics representing detection of "first unusualness", "second unusualness", "third unusualness", and "fourth unusualness", line graphs representing numerical values of measurement data, "first data" and "second data", from field devices 20 are displayed. Furthermore, at the worker terminal 30, for "detection model DM002", with graphics representing detection of "first unusualness" and "second unusualness", line graphs representing numerical values of measurement data, "first data" and "second data", from field devices 20 are displayed. In a case where the worker W selects "detection model DM001" as an adopted model, the worker W clicks on a checkbox for "adoption" of "detection model DM001". In confirming the adopted model, the worker W is able to transmit a result of selection of the adopted model to the server device 10 by clicking on a "confirm" button.

### 2-4-6-2. Display Format

As illustrated by the example in FIG. 10, the worker terminal 30 enables selection and display of data needed in determination of an adopted model. In the example of FIG. 10, because "display detection results and measurement data" has been selected from a pulldown menu, detection results, "unusualness", and measurement data, "data", are displayed at the worker terminal 30. The worker terminal 30 may display the detection results only or display the measurement data only. Furthermore, the worker terminal 30 may display evaluation indices of the detection models DM, with the evaluation indices superimposed on the time series graphs described above.

### 2-4-6-3. Input of Determination Result

The worker W may input whether a detection result is true or false by manipulation on the time series graph described above. For example, by double-clicking on a rhombus, a graphic representing "unusualness" that is a detection result, the worker W may input that the detection result is "true".

### 3. Flow of Processing by Anomaly Predictor Detection System 100

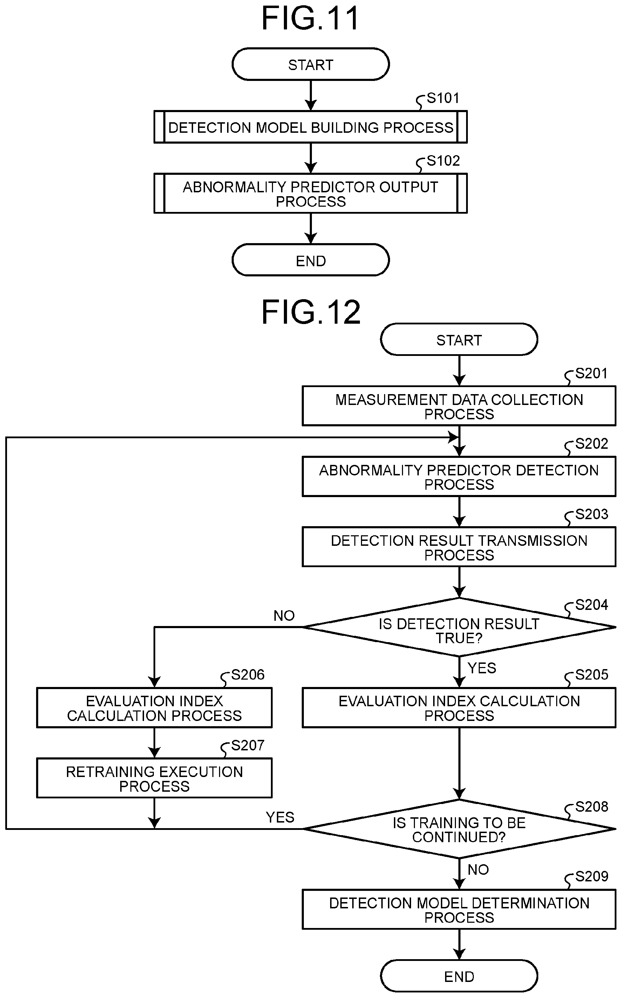

A flow of processing by the anomaly predictor detection system 100 according to the embodiment will now be described by use of FIG. 11 to FIG. 13. A detection model building process and an anomaly predictor output process will hereinafter be described after description of a flow of the overall processing by the anomaly predictor detection system 100.

### 3-1. Overall Processing by Anomaly Predictor Detection System 100

The flow of the overall processing by the anomaly predictor detection system 100 according to the embodiment will now be described by use of FIG. 11. FIG. 11 is a flowchart illustrating an example of the overall flow by the anomaly predictor detection system 100 according to the embodiment. Processing from Step S101 to Step S102 described below may be executed in a different sequence. Furthermore, some of the processing from Step S101 to Step S102 described below may be omitted.

### 3-1-1. Detection Model Building Process

Firstly, the server device 10 executes the detection model building process (Step S101). For example, the server device 10 obtains a highly precise detection model DM by repeatedly executing the process from Step S201 to Step S209 described later.

### 3-1-2. Anomaly Predictor Output Process

Secondly, the server device 10 executes the anomaly predictor output process (Step S102). For example, the server device 10 implements highly precise anomaly predictor detection by executing the process from Step S301 to Step S303 described later, through use of a highly precise detection model DM built by the process of Step S101.

### 3-2. Detection Model Building Process

A flow of the detection model building process by the anomaly predictor detection system 100 according to the embodiment will now be described by use of FIG. 12. FIG. 12 is a flowchart illustrating an example of the flow of the detection model building process by the anomaly predictor detection system 100 according to the embodiment. The process from Step S201 to Step S209 described below may be executed in a different sequence. Furthermore, some of the process from Step S201 to Step S209 described below may be omitted.

### 3-2-1. Measurement Data Collection Process

Firstly, the server device 10 executes a measurement data collection process (Step S201). For example, the server device 10 collects measurement data obtained by the field device 20.

### 3-2-2. Anomaly Predictor Detection Process

Secondly, the server device 10 executes the anomaly predictor detection process (Step S202). For example, by inputting measurement data that have been collected, into a detection model DM, the server device 10 detects an anomaly predictor.

### 3-2-3. Detection Result Transmission Process

Thirdly, the server device 10 executes a detection result transmission process (Step S203). For example, the server device 10 transmits a detection result to the worker terminal 30 used by the worker W and causes the detection result to be displayed on the monitor screen.

### 3-2-4. Detection Result Determination Process

Fourthly, the server device 10 executes a detection result determination process (Step S204). For example, the server device 10 receives, via the worker terminal 30, a determination on whether an anomaly predictor checked by the worker W is true or false. In a case where the detection result is true (Step S204: Yes), the server device 10 proceeds to a process of Step S205. On the contrary, in a case where the detection result is false (Step S204: No), the server device 10 proceeds to a process of Step S206.

### 3-2-5. Evaluation Index Calculation Process

Fifthly, the server device 10 executes the evaluation index calculation process (Steps S205 and S206). For example, the server device 10 calculates precision score of a detection model DM as an evaluation index.

### 3-2-6. Retraining Execution Process

Sixthly, the server device 10 executes the retraining execution process (Step S207) and returns to the process of Step S202. For example, the server device 10 executes retraining of a detection model DM, of which a detection result has been determined to be false, and updates its parameters.

### 3-2-7. Training Continuation Determination Process

Seventhly, the worker executes a training continuation determination process (Step S208). For example, the worker W determines that training is to be ended in a case where the evaluation index has become equal to or larger than a predetermined value or the worker W has determined that there is no trouble in the work situation. In a case where the training is to be continued (Step S208: Yes), the server device 10 returns to the process of Step S202. On the contrary, in a case where the training is not to be continued (Step S208: No), the server device 10 proceeds to a process of Step S209.

### 3-2-8. Detection Model Determination Process

Eighthly, the server device 10 executes a detection model determination process (Step S209) and ends the detection model building process. For example, in a case where a detection model DM with an evaluation index having a predetermined value has been automatically selected or a detection model DM selected by the worker W has been received, the server device 10 uses the detection model DM related to the selection as an adopted model in the anomaly predictor detection process.

### 3-3. Anomaly Predictor Output Process

A flow of the anomaly predictor output process by the anomaly predictor detection system 100 according to the embodiment will now be described by use of FIG. 13. FIG. 13 is a flowchart illustrating an example of the flow of the anomaly predictor output process by the anomaly predictor detection system 100 according to the embodiment. The process from Step S301 to Step S303 described below may be executed in a different sequence. Furthermore, some of the process from Step S301 to Step S303 described below may be omitted.

### 3-3-1. Measurement Data Collection Process

Firstly, the server device 10 executes a measurement data collection process (Step S301). For example, the server device 10 collects measurement data obtained by the field device 20.

### 3-3-2. Anomaly Predictor Detection Process

Secondly, the server device 10 executes the anomaly predictor detection process (Step S302). For example, by inputting measurement data that have been collected, into a detection model DM that is an adopted model, the server device 10 detects an anomaly predictor. In a case where plural detection models DM have been determined as adopted models, the server device 10 may detect any anomaly predictor by using the plural detection models DM or may detect any anomaly predictor by using a detection model DM with the largest evaluation index among the plural detection models DM.

### 3-3-3. Detection Result Transmission Process

Thirdly, the server device 10 executes the detection result transmission process (Step S303) and ends the anomaly predictor output process. For example, the server device 10 transmits a detection result to the worker terminal 30 used by the worker W and causes the detection result to be displayed on the monitor screen. In a case where plural detection models DM have been determined as adopted models, the server device 10 may transmit all of plural detection results to the worker terminal 30 or may notify the worker terminal 30 of only a detection result that is output from a detection model DM with the largest evaluation index among the plural detection models DM.

### 4. Effects of Embodiment

Lastly, description will be made on effects of the embodiment. The following description is on a first effect to a tenth effect corresponding to the processing according to the embodiment.

### 4-1. First Effect

Firstly, in the above described processing according to the embodiment, the server device 10 collects measurement data measured by the field device 20, inputs the measurement data collected, into a trained detection model DM that predicts a predetermined event in response to input of measurement data, obtains an output result from the trained detection model DM, and generates a retrained model by executing retraining of the trained detection model DM by using a label value input by the worker W and the measurement data collected in a case where the output result from the trained detection model DM is different from a check result by the worker W who has checked the field device 20, for which the predetermined event was predicted. Therefore, this processing enables improvement in the precision of a learning model.

### 4-2. Second Effect

Secondly, in the above described processing according to the embodiment, a trained detection model DM is a detection model DM trained by unsupervised machine learning using each piece of measurement data on a normal value as training data from plural pieces of measurement data collected in a predetermined time period. Furthermore, the server device 10 executes retraining of the trained learning model by supervised training having teacher data assigned to measurement data collected, the teacher data being a label value based on a determination result. Therefore, this processing enables improvement in the precision of a learning model by unsupervised training.

### 4-3. Third Effect

Thirdly, in the above described processing according to the embodiment, in a case where an output result from a trained detection model DM corresponds to a predictor of an anomalous state and the anomalous state or an anomaly predicted state at the field device 20 has not been affirmed through a determination result by the worker W, the server device 10 executes retraining of the trained detection model DM by using teacher data having a label value assigned to measurement data collected, the label value indicating presence or absence of the anomalous state or anomaly predicted state based on the determination result. Therefore, this processing enables improvement in the precision of a learning model that detects any anomaly predictor.

### 4-4. Fourth Effect

Fourthly, in the above described processing according to the embodiment, on the basis of a detection result that is output from a trained detection model DM and a determination result by the worker W who has checked the field device 20, for which a predetermined event was predicted, the server device 10 calculates an evaluation index of the trained detection model DM. Therefore, this processing enables improvement in the precision of a learning model by evaluation of the learning model resulting from unsupervised training.

### 4-5. Fifth Effect

Fifthly, in the above described processing according to the embodiment, the server device 10 executes retraining of a trained learning model on the basis of an evaluation index calculated. Therefore, this processing enables improvement in the precision of a learning model by retraining of the learning model with a low evaluation index.

### 4-6. Sixth Effect

Sixthly, in the above described processing according to the embodiment, the server device 10 obtains an output result of each of plural trained detection models DM that predict a predetermined event, calculates, on the basis of the output result from each of the plural trained detection models DM and a determination result by the worker W who has checked the field device 20, for which the predetermined event was predicted, an evaluation index of each of the plural trained detection models DM, and determines a selection of a trained detection model DM with an evaluation index equal to or larger than a predetermined value, from the plural trained detection models DM. Therefore, this processing enables improvement in the precision of a learning model by automatic selection of the learning model that is highly precise.

### 4-7. Seventh Effect

Seventhly, in the above described processing according to the embodiment, the server device 10 determines adoption of a trained detection model DM selected by the worker W from plural trained detection models DM. Therefore, this processing enables improvement in the precision of a machine learning model through selection of the machine learning model that is highly precise, by the worker W.

### 4-8. Eighth Effect

Eighthly, in the above described processing according to the embodiment, on the basis of a detection result that is output from a trained detection model DM and a determination result by the worker W who has checked the field device 20, for which a predetermined event was predicted, the server device 10 calculates, as an evaluation index or evaluation indices, at least one of a accuracy score, precision score, a recall score, specificity, or an F value, and causes the worker terminal 30 used by the worker W to display the evaluation index or indices. Therefore, this processing enables improvement in the precision of a learning model through selection of the learning model that is highly precise, by the worker W, according to the kind of an output result.

### 4-9. Ninth Effect

Ninthly, in the above described processing according to the embodiment, the server device 10 generates a time series graph representing a history of measurement data collected, causes the worker terminal 30 used by the worker W to display the time series graph generated, and determines adoption of a learning model on the basis of the time series graph displayed. Therefore, this processing enables improvement in the precision of a machine learning model through selection of the machine learning model that is highly precise by the worker W referring to time series data.

### 4-10. Tenth Effect

Tenthly, in the above described processing according to the embodiment, the server device 10 generates the normal state screen indicating a time period of a normal state that is a detection result, and causes the worker terminal 30 used by the worker W to display the normal state screen generated in a form of enabling a switchover from display or non-display through manipulation by the worker W.

### System

The processing procedures, control procedures, specific names, and information including various data and parameters, which have been described above and illustrated in the drawings may be optionally modified unless particularly stated otherwise.

Furthermore, the components of each apparatus in the drawings have been illustrated functionally and/or conceptually, and are not necessarily physically configured as illustrated in the drawings. That is, specific modes of separation and integration of each apparatus are not limited to those illustrated in the drawings. That is, all or part of each apparatus may be configured by functional or physical separation or integration in any units according to various loads and use situations.

Furthermore, all or any part of the processing functions performed in each apparatus may be implemented by a CPU and a program analyzed and executed by the CPU, or may be implemented as hardware by wired logic.

### Hardware

An example of a hardware configuration of the server device 10 that is an alarm detection apparatus will be described next. The other apparatuses may have a similar hardware configuration. FIG. 14 is a diagram illustrating the example of the hardware configuration according to the embodiment. As illustrated in FIG. 14, the server device 10 has a communication device 10a, a hard disk drive (HDD) 10b, a memory 10c, and a processor 10d. Furthermore, these units illustrated in FIG. 14 are connected to one another via a bus.

The communication device 10a is, for example, a network interface card and performs communication to and from another server. The HDD 10b stores therein a program that causes the functions illustrated in FIG. 2 to operate and a database.

The processor 10d causes a process to be operated, the process executing the functions described by reference to FIG. 2, for example, by reading, from the HDD 10b, the program that executes the same processing as the processing units illustrated in FIG. 2, and loading the program into the memory 10c. For example, this process executes the same functions as the processing units that the server device 10 has. Specifically, the processor 10d reads the program having the same functions as the collection unit 15a, the detection unit 15b, and the execution unit 15c, from the HDD 10b, for example. The processor 10d then executes the process that executes the same processing as the collection unit 15a, the detection unit 15b, and the execution unit 15c, for example.

As described above, the server device 10 operates as an apparatus that executes various processing methods by reading and executing the program. Furthermore, the server device 10 may implement the same functions as the above described embodiment by reading the program from a recording medium by means of a medium reading device, and executing the program read. The program referred to in this embodiment is not limited to being executed by the server device 10. For example, the present invention may be similarly applied to a case where another computer or server executes the program, or a case where the computer and the server execute the program in corporation with each other.

This program may be distributed via a network, such as the Internet. Furthermore, the program may be executed by being recorded in a computer-readable recording medium, such as a hard disk, a flexible disk (FD), a CD-ROM, a magneto-optical disk (MO), or a digital versatile disc (DVD), and being read from the recording medium by a computer.

The present invention has an effect of enabling improvement of precision of a learning model.

## Claims

1. A detection apparatus (10) comprising:
a collection unit (15a) that collects measurement data measured by a measurement device (20);
a detection unit (15b) that inputs the measurement data collected, into a trained learning model and obtains a detection result that is output from the trained learning model, the trained learning model being a learning model that predicts a predetermined event in response to input of measurement data; and
an execution unit (15c) that executes, in a case where the detection result from the trained learning model is different from a determination result by a user who has checked the measurement device (20) for which the predetermined event was predicted, retraining of the trained learning model by using a label value input by the user and the measurement data collected, and thereby generates a retrained model.

2. The detection apparatus (10) according to claim 1, wherein
the trained learning model is a learning model trained by unsupervised training using training data including each piece of measurement data on a normal value from plural pieces of measurement data collected in a predetermined time period, and
the execution unit (15c) executes retraining of the trained learning model by supervised training with teacher data assigned to the measurement data collected, the teacher data being the label value based on the determination result.

3. The detection apparatus (10) according to claim 1 or 2, wherein in a case where the detection result that is the output from the trained learning model corresponds to a predictor of an anomalous state and the anomalous state or an anomaly predicted state has not been affirmed by the determination result, the execution unit (15c) executes retraining of the trained learning model by using teacher data having the label value assigned to the measurement data collected, the label value being based on the determination result and indicating presence or absence of the anomalous state or the anomaly predicted state.

4. The detection apparatus (10) according to any one of claims 1 to 3, wherein the execution unit (15c) calculates an evaluation index of the trained learning model on the basis of the detection result that is the output from the trained learning model and the determination result.

5. The detection apparatus (10) according to claim 4, wherein the execution unit (15c) executes retraining of the trained learning model on the basis of the evaluation index.

6. The detection apparatus (10) according to any one of claims 1 to 5, wherein
the detection unit (15b) obtains a detection result that is output of each of plural trained learning models that predict the predetermined event, and
the execution unit (15c)
calculates an evaluation index of each of the plural trained learning models, on the basis of the detection result that is the output of each of the plural trained learning models and a determination result, and
determines adoption of a trained learning model having the evaluation index equal to or larger than a predetermined value, from the plural trained learning models.

7. The detection apparatus (10) according to any one of claims 1 to 6, wherein the execution unit (15c) determines adoption of a trained learning model selected by the user from a plurality of the trained learning models.

8. The detection apparatus (10) according to any one of claims 1 to 7, wherein the execution unit (15c)
calculates, as an evaluation index or evaluation indices of the trained learning model, at least one of a accuracy score, precision score, a recall score, specificity, and an F value, on the basis of the detection result that is the output of the trained learning model and the determination result by the user who has checked the measurement device (20) for which the predetermined event was predicted, and
causes a terminal (30) used by the user to display the evaluation index.

9. The detection apparatus (10) according to any one of claims 1 to 8, wherein the execution unit (15c)
generates a time series graph representing a history of the measurement data collected,
causes a terminal (30) used by the user to display the time series graph, and
determines adoption of a learning model on the basis of the time series graph displayed.

10. The detection apparatus according to any one of claims 1 to 9, wherein the execution unit (15c)
generates a screen indicating a time period of a normal state that is the detection result, and
causes a terminal (30) used by the user to display the screen generated, in a form enabling a switchover from display or non-display through manipulation by the user.

11. A detection method that causes a computer (10) to execute a process comprising:
collecting measurement data measured by a measurement device (20);
inputting the measurement data collected, into a trained learning model and obtaining a detection result that is output from the trained learning model, the trained learning model being a learning model that predicts a predetermined event in response to input of measurement data; and
executing, in a case where the detection result that is the output from the trained learning model is different from a determination result by a user who has checked the measurement device (20) for which the predetermined event was predicted, retraining of the trained learning model by using a label value input by the user and the measurement data collected, and thereby generating a retrained model.

12. A detection program that causes a computer (10) to execute a process comprising:
collecting measurement data measured by a measurement device (20);
inputting the measurement data collected, into a trained learning model and obtaining a detection result that is output from the trained learning model, the trained learning model being a learning model that predicts a predetermined event in response to input of measurement data; and
executing, in a case where the detection result that is the output from the trained learning model is different from a determination result by a user who has checked the measurement device (20) for which the predetermined event was predicted, retraining of the trained learning model by using a label value input by the user and the measurement data collected, and thereby generating a retrained model.
